# EUROPEAN PATENT SPECIFICATION

(11) **EP 0 599 654 B1**
(45) Date of publication and mention of the grant of the patent: **17.06.1998**
(21) Application number: 93309441.9
(22) Date of filing: 26.11.1993
(51) Int. Cl.: H01M 2/02, H01M 4/66

(54) **Non-aqueous electrolyte electrochemical cell**
Elektrochemische Zelle mit nichtwässrigen Elektrolyten
Cellule électrochimique à électrolyte non-aqueux

(30) Priority: 26.11.1992 JP 317296/92; 28.09.1993 JP 241593/93
(43) Date of publication of application: 01.06.1994
(73) Proprietor: SEIKO ELECTRONIC COMPONENTS LTD., Sendai-shi Miyagi (JP)
(72) Inventor: Hayasaka, Toyoo, c/o Seiko Elec. Components Ltd., Taihaku-ku, Sendai-shi, Miyagi (JP); Harada, Toyoo, c/o Seiko Elec. Components Ltd., Taihaku-ku, Sendai-shi, Miyagi (JP); Sakai, Tsugio, c/o Seiko Elec. Components Ltd., Taihaku-ku, Sendai-shi, Miyagi (JP); Ohshida, Junko, c/o Seiko Elec. Components Ltd., Taihaku-ku, Sendai-shi, Miyagi (JP)
(74) Representative: Sturt, Clifford Mark

(56) References cited:
- EP-A- 0 441 583
- EP-A- 0 441 589
- DE-A- 3 918 963
- FR-A- 2 611 405
- JP-A- 2 126 554
- JP-A- 3 240 215
- JOURNAL OF THE ELECTROCHEMICAL SOCIETY. vol. 132, no. 1 , January 1985 , MANCHESTER, NEW HAMPSHIRE US pages 125 - 126 NILES A FLEISCHER ET AL 'Galvanic Action Between MnO2-Metal Couples and Its Effect on Discharge of Li/MnO2 Cells'
- CHEMICAL ABSTRACTS, vol. 116, no. 26, 29 June 1992, Columbus, Ohio, US; abstract no. 259064c, HATTORI 'Lithium secondary batteries with high chromium stainless steel cathode case' & JP-A-04 010 365 (HITACHI MAXELL) 14 January 1992
- PATENT ABSTRACTS OF JAPAN vol. 4, no. 59 (E-009)2 May 1980 & JP-A-55 028 238 (MATSUSHITA ELECTRIC IND CO) 28 February 1980
- PATENT ABSTRACTS OF JAPAN vol. 16, no. 381 (E-1248)22 April 1992 & JP-A-04 121 962 (ASAHI CHEM IND CO LTD) 22 April 1992

## Description

The present invention relates to a small size electrochemical cell of high capacity.

In the prior art there are wet type electrochemical cells which use a positive electrode case material comprising an austenitic ferrite stainless steel (SUS329J1) which has an aluminium layer inside the case, (hereinafter briefly specified as A*l*-SUS clod materials). This type of cell can be found in Japanese Patent laid open No. 62-94908.

The prior art also discloses certain stainless steels which display improved corrosion resistance when used as the cathode current collector of non-aqueous cells.

EP-A-0441589 identifies an austenitic stainless steel having a high Ni content of 22-25 %.

Stainless steels have been classified internationally. There is also a classification of Japanese standards corresponding thereto. The letters SUS are used to denote a Japanese standard. In the case of SUS329J1, the chemical composition is as follows: (C ≤ 0.08) + (Si ≤ 1) + (Mn ≤ 1.5) + (P ≤ 0.04) + (S ≤ 0.03) + (3 ≤ Ni ≤ 6) + (23 ≤Cr ≤ 28) + (1 ≤ Mo ≤ 3).

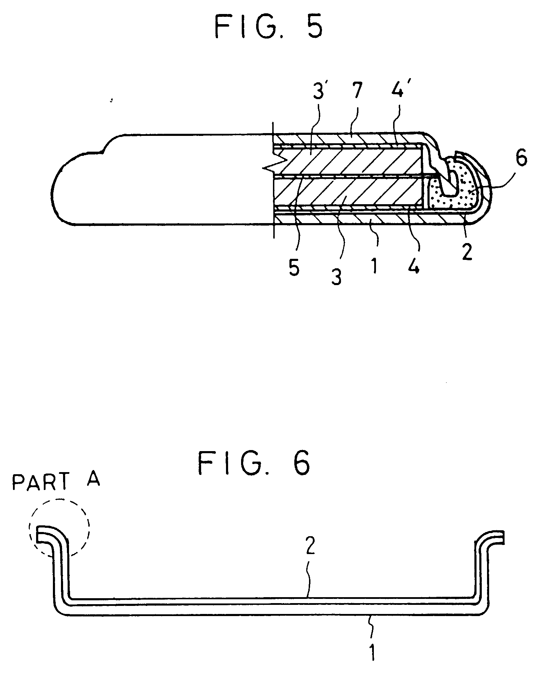

Figure 5 shows a sample constitution of the prior art electrochemical cell with an electric double-layer capacitor. A polarisation electrode 3, 3' comprising actuated carbon fibre cloth is provided on each side of which is formed a collector 4, 4' made of aluminium. The collector is formed using a plasma spraying method, and the said actuator carbon fibre cloth is welded on a positive electrode case 1, 2 and a negative electrode case 7 using, for example, a laser welding method. The said electrodes 3, 3' are coupled to each other by way of separator 5. The electrodes are assembled by bending the upper side of the positive electrode case towards the inside after an organic electrolytic liquid is poured into it. The electrolytic liquid comprises a solvent in which is melted a tetra-alkylammonium compound, or a tetra alkyl phosphonium compound etc. The solvent may comprise an aprotic r-butyl lactone, ethylene carbonate, propylene carbonate etc.

When the aforesaid prior art electrochemical cell is usually used in the voltage range of 2 - 2.8V, anodising of the inside of the positive electrode case which is made of stainless steel only, is accelerated. The solution of metal ion becomes more active, and then a higher impedance of the cell or a decrease in the electric capacity can be observed. In order to suppress the said anodising, the aluminium layer is set inside of the positive electrode case.

Since stainless steel of JIS standard SUS329J1, or SUS447J1 is used as the material of the positive electrode case, two different metals of stainless steel and aluminium must be laminate for use as the materials of the positive electrode case. The chemical composition of SUS447J1 is: (C ≤ 0.01) + (Si ≤ 0.4) + (Mn ≤ 0.4) + (P ≤ 0.03) + (S ≤ 0.02) + (28.5 ≤ Cr ≤ 32) + (1.5 ≤ Mo ≤ 2.5) + (N ≤ 0.015). However, a uniform and equally thick aluminium layer is difficult to manufacture and multiple lamination processes are necessary for its production. Thus its cost is several times greater than a simple substance such as stainless steel.

Moreover, during pressing the aluminium layer sometimes covers the upper side edge of the positive electrode as as shown in figure 6. On assembly of the positive electrode case 1, 2 and the negative electrode case by bending the positive electrode case towards the inside at the edge and by shielding the cell, the aluminium on the inside of the positive electrode case comes off and small fragments of it become coupled with the negative electrode case 3. This causes short circuits. Even when the aluminium layer does not cover the edge of the stainless steel, it invites divergence between the positive electrode case and the negative electrode case in shielding and this also causes short-circuits.

According to the present invention, an electrochemical cell with organic electrolytic liquid for use at levels of 2- 2.8V is provided whilst anodising of the positive electrode cell, without having an aluminium layer inside, can be suppressed. The product cost is decreased and therefore its productivity can be improved.

An object of the present invention is to provide a small size electrochemical cell having a high capacity.

Another object of the present invention is to provide a non-aqueous electrolyte electrochemical cell capable of operating at the highest working voltage of 2.8 V.

Still another object of the present invention is to provide a non-aqueous electrolyte electrochemical cell using stainless steel of low cost for the positive electrode case.

A further object of the present invention is to provide a non-aqueous electrolyte electrochemical cell using stainless steel having a pitting index between 30.5 and 45 as the positive electrode case.

The aforesaid problems above can be solved in that the materials of the positive cell comprises a high Ni austenitic stainless steel or according to the present invention a high pressure tightness austenitic Ferrite duplex stainless steel.

According to the present invention, an electrochemical cell operating at the highest working voltage of 2.8V can be obtained by way of the above means.

A high Ni austenitic stainless steel may include high Cr and higher Mo austenitic stainless steel, which according to JIS standard SUS317J4L shows very good corrosion resistivity even in severe atmospheres. Table 1 exhibits the data of chemical components of high Cr high Mo austenitic stainless steel SUS317J4L.

**[Table 1]**

| C | Si | Mn | Ni | Cr | Mo | N |
|---|---|---|---|---|---|---|
| % | | | 24.00 | 22.00 | 5.00 | 0.170 |
| ≦0.030 | ≦1.00 | ≦1.00 | to | to | to | to |
| | | | 26.00 | 24.00 | 6.00 | 0.220 |

SUS329J4L, which is a kind of austenitic Ferrite duplex stainless steel and of which a representative sample is 25Cr-6Ni-3.5 Mo also shows good corrosion resistibility, although it is slightly inferior to SUS317J4L. Table 2 exhibits the data of chemical components of SUS329J4L.

**[Table 2]**

| C | Si | Mn | Ni | Cr | Mo | N |
|---|---|---|---|---|---|---|
| % | | | 5.50 | 24.00 | 2.50 | 0.08 |
| ≦0.030 | ≦1.00 | ≦1.50 | to | to | to | to |
| | | | 7.50 | 26.00 | 3.50 | 0.20 |

Even when the inside surface of each electrochemical cell with a positive electrode case is made of both above materials which are in direct contact with the organic electrolytic liquid or positive electrode, the dissolution into organic electrolytic liquid will be suppressed because of its high corrosion resistivity.

Embodiments of the present invention will now be described with reference to the accompanying drawings, of which:
Figure 1 shows a vertical section half of which shows the inside structure of an electrochemical cell in accordance with the present invention;
Figure 2 shows a graph of the dependency of corrosion potential against temperature for various stainless steels;
Figure 3 shows a graph of voltage/current curves of various metals;
Figure 4 shows a graph of the composition (percentage) of Cr and Mo in relation to pitting temperature ;
Figure 5 show a vertical section of the inside structure of an electric double-layer capacitor of a traditional electrochemical cell sample; and
Figure 6 shows a vertical section of a traditional positive pole case with a magnified part.

Hereinafter the present invention will be described in connection with the accompanying drawings.

Corrosion tests on miscellaneous stainless steels in a aqueous solutions were made.

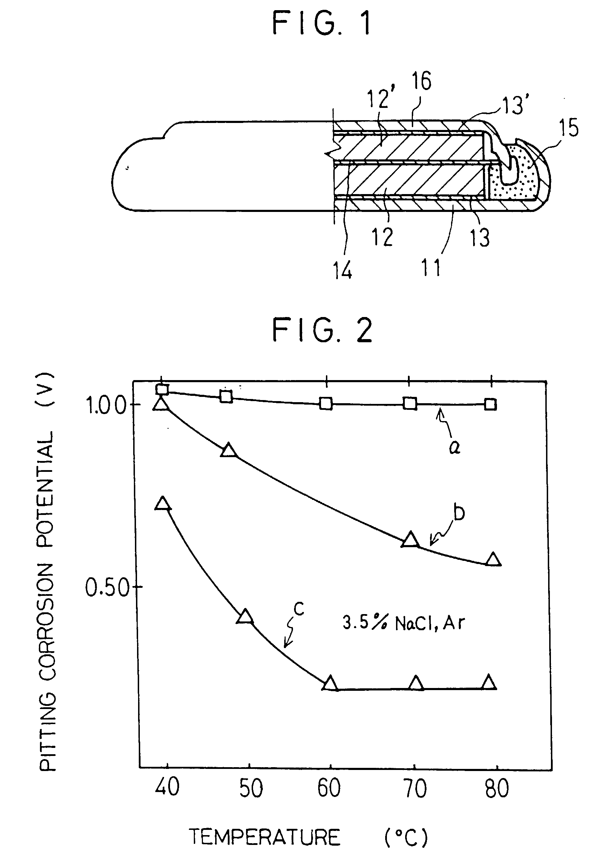

Figure 2 shows the pitting corrosion potential in relation to different temperatures in an aqueous solution of miscellaneous chlorides. a and b in figure 2 show the respective characteristics of SUS317J4L (comparative) and SUS329J4L (used in this invention) and c shows the characteristics of SUS329J1. When the temperature rises, the pitting corrosion potential of a does not change, that of b decreases, but the corrosion resistibility of both is better than the pitting corrosion potential of c which decreases drastically at higher temperatures. Thus the corrosion resistibility of c is not good.

Miscellaneous stainless steels are tested and the voltage/current characteristics of a Li/Li⁺ reference electrode on an Anode electrode and on a Cathode electrode are noted. In this test, tetra ethyl ammonium tetra fluoro borate [(C2H5) 4NBF4] is dissolved into propylene carbonate to form the battery electrolyte.

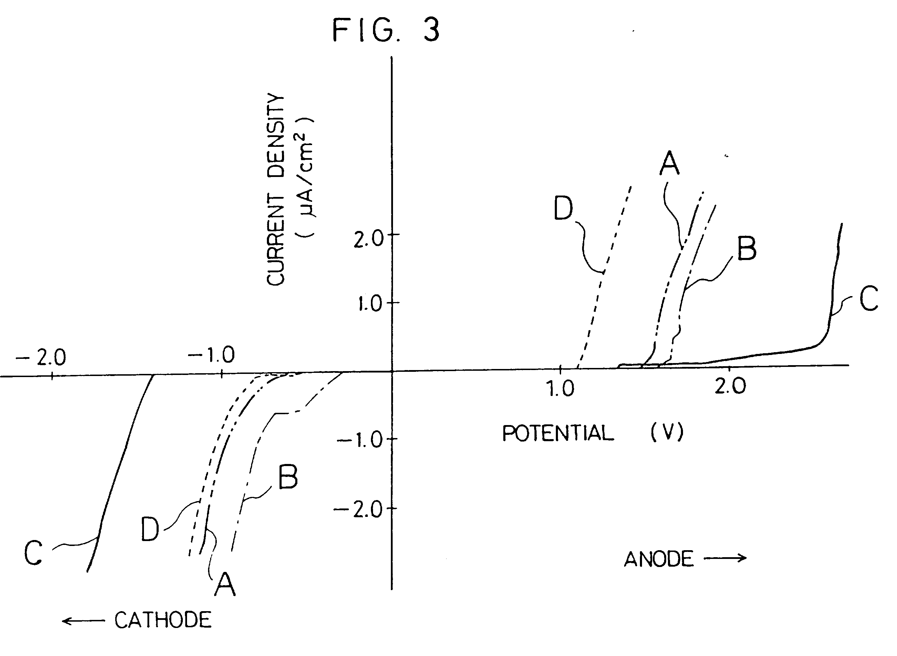

In figure 3, A and B represent respectively SUS317J4L stainless steel (comparative) and SUS329J4L stainless steel, (in this invention). C and D are for comparison purposes of the prior art, and show the voltage/current characteristics of aluminium-laminated SUS329J1, and SUS329J1 stainless steel, respectively. Metal dissoluting reaction occurs at the anode electrode (or cathode electrode as for a cell). When the electric voltage is increased, the anode reaction becomes bigger: in the neighbourhood of 1.6 V for A and 1.7 V for B in this invention, and in the neighbourhood of +2.6 V for C and 1.2 V for D in the prior art. All the aforesaid voltages are at the current density of 1 µA/cm².

Figure 3 shows profiles at the twelfth sweep in repetition. Since the highest voltage of the cell's cathode electrode (or anode electrode in figure 3) is measured at 1.2V (and +1.6V for the anode electrode of the cell) the maximum usage voltage is 2.8V. A's and B's dissoluting reaction at the positive electrode does not occur because both are at a higher position than the cell's cathode electrode voltage. D has a problem in that its dissolving reaction occurs from -1.2V, which is equivalent to the voltage (1.2V) on the cell's cathode electrode. C's initiating voltage of dissoluting reaction is higher because an oxide film is formed on the surface of the aluminium.

Generally speaking, it is said that the corrosion resistance of stainless steel is affected more by the inclusion per volume of Cr, Mo and less by that of Ni, Cu, N. The pitting index (PI) is known as an indicator of corrosion resistance and is shown as PI = Cr% + 3 x Mo% + 16 x N%. Values of the various materials are shown in Table 3.

**[Table 3]**

| | Comparative | Invention | Prior art |
|---|---|---|---|
| PI value | SUS317J4L | SUS329J4L | SUS329J1 |
| | 42.0 | 36.5 | 30.1 |

The higher the PI value is, the better the corrosion resistance is. But at a PI of 45 - 50 or more, the processability and mechanical characteristics of the materials become inferior. The specification for the positive electrode case is not then fulfilled by such materials. The different evaluation of corrosion resistance which resembles the PI is mentioned in J. Kolts, J. B. C. Wu, P. E. Manning, and A.I. Asphahani, in "Highly Alloyed Austenitic Material for Corrosion Resistance", Corrosion Reviews, 6(4), P279-326 (1986).

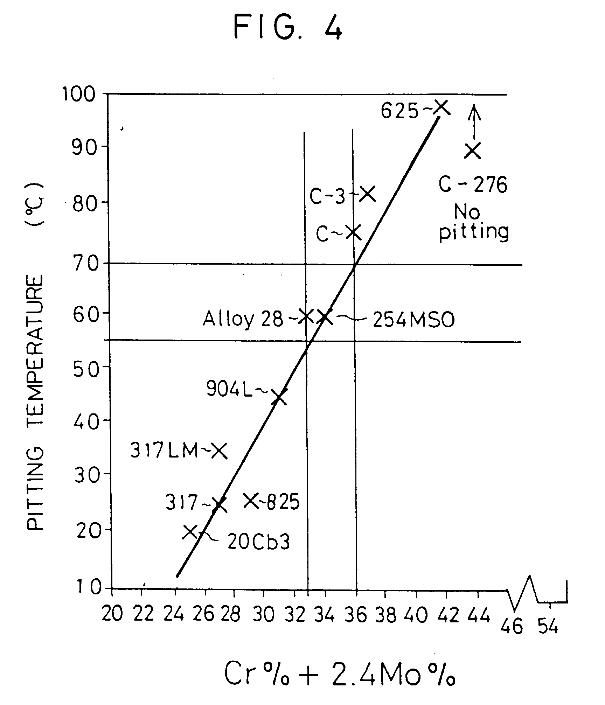

Figure 4 is extracted from the above, and shows the relationship of the critical temperature for pitting and composition for Fe-Ni-Cr-Mo alloys. The corrosion of Fe-Ni-Cr-Mo alloys is tested in a solvent of 4%NaCl + 1 1%Fe₂(SO₄)₃ + 0.01MHCl.

As shown in figure 4, the higher the total of Cr% + 2.4Mo% is, the higher the corrosion temperature is according to the calculation of pitting temperatures of SUS317J4L and SUS329J4L in this invention. Using figure 4 above , a range of 55-70°C is estimated, and it is expected that corrosion may be at considerably higher temperatures.

### Embodiment 1

Through a pressing process, the positive electrode cases are made with SUS317J4L of high Ni austenitic stainless steel plate of approximately 0.2 mm in thickness and SUS329J4L of high corrosion resistibility austenitic Ferrite duplex stainless steel plate (of 0.2 mm in thickness). For comparison purposes, SUS329J1 with a layer thickness of 0.16 mm and Al-SUS329J1 including an aluminium layer of thickness 40 µm and a SUS329J1 stainless steel element only of thickness 0.2 mm, as shown in figure 5, is tested. Using the above positive electrode cases, an electrochemical cell (Electric double layer capacitor) as shown in figure 1 are assembled. In more detail, firstly an active carbon fibre with a specific surface of 2000 m²/g to form a polarisable electrode is pressed in the shape of a disc. Secondly, such a disc type cloth is inserted into the inside of the bottom of each of a positive electrode 11 and a negative electrode 16 after an electro-conductive paste 13, 13' is applied like a film. Thirdly, the electrodes are dried for 2 hours at a temperature of 100°C after crimping. The positive electrode which is processed as above, has a disc-shaped separator 14 set therein, which is made of a glass fibre filter and is subjected to the drying process for 30 minutes at a temperature of 200 °C. The electrode is filled with an organic electrolytic liquid. The liquid comprises boron fluoride in which tetra ethyl phosphoric acid is dissolved. The assembled positive electrode is set into the negative electrode after a polypropylene gasket 15 is forced into the negative electrode.

The cells described above were tested and Table 4 shows the decrease ratio of capacity and increase ratio of AC impedance (measured at 1 kHz) after 500 hours in an atmosphere at 70°C when 2.8 V is applied. The table includes the burr occurring ratio of stainless steel or aluminium burrs when assembling the cell from the positive electrode case and negative electrode case in one form and bending and shielding the edge of the aforesaid positive electrode case towards the inside. As defined above, A, B, C, D show respectively SUS317J4L, SUS329J4L, A*l*/SUS329J1, and SUS329J1 which are used for the positive electrode of an electrochemical cells.

**[Table 4]**

| Cell | Decrease ratio of capacity (%) | Increase of AC impedance (%) | Burr occurring ratio (%) |
|---|---|---|---|
| A | - 4.3 | + 15 | 0 |
| B | - 5.5 | + 18 | 0 |
| C | - 8.1 | + 24 | 9.6 |
| D | - 35.6 | + 53 | 0 |

According to Table 4, a better result is realised when the positive electrode case is formed according to the present invention. Moreover, they are without an aluminium layer unlike that of C which has an aluminium layer which suffers from burrs. The other prior art positive electrode case which has no aluminium layer shows sharp ratios of change and therefore shows less reliability. Burrs occurring during cell shielding cannot be found in A and B of the present invention and in the case of C there is observed about a 10% burr occurring ratio, comprising burrs of aluminium which come off the aluminium layer.

### Embodiment 2

An organic semiconductor, polyacene may be used in the cells. "Polyacene" is a kind of organic conductive material and is capable of releasing and absorbing anions (for example BF₄-) and/or cations (eg. Li ⁺ ). Accordingly, "polyacene" is used as an active material for a rechargeable cell and as a polarisation electrode of a capacitor. The cells are assembled in the same manner and conditions of the previous embodiment 1, and the same characteristics are shown in table 5, in which A, B, C, D comprise the same positive electrode cases as in the previous embodiment.

**[Table 5]**

| Cell | Decrease ratio of capacity (%) | Increase ratio of AC impedance (%) | Burr occurring ratio (%) |
|---|---|---|---|
| A | - 3.5 | + 14 | 0 |
| B | - 5.4 | + 19 | 0 |
| C | - 9.0 | + 30 | 7.6 |
| D | - 29.1 | + 61 | 0 |

### Embodiment 3

Polyacene is used for the positive electrode, and Lithium-doped polyacene and propylene carbonate with 0.5 mol. lithium perchlorate dissolved therein is used for the negative electrode. The cells are assembled in the same manner and conditions of the first embodiment. Table 6 shows the decrease ratio of capacity and increase ratio of AC impedance (measured at 1 kHz) after 500 hours in an atmosphere of 60°C when 3.3 V is applied, and the burr occurring ratio. A, B, C, D in table 6 are the same positive electrode cases respectively used in the first embodiment.

**[Table 6]**

| Cell | Decrease ratio of capacity (%) | Increase ratio of AC impedance (%) | Burr occurring ratio (%) |
|---|---|---|---|
| A | - 5.9 | + 18 | 0 |
| B | - 6.8 | + 23 | 0 |
| C | - 9.7 | + 34 | 7.1 |
| C | 28.0 | + 76 | 0 |

### Embodiment 4

Manganese dioxide is used for the positive electrode, and Lithium metal and an organic electrolyte liquid of mixed solution of propylene carbonate and DME with 1 mol. lithium perchlorate soluted therein is used for the negative electrode. DME comprises 1, 2-dimethoxyethane (CH₃OCH₂CH₂OCH₃). Accordingly, the negative electrode is a lithium metal. The cells are assembled in the same manner and conditions of the first embodiment. Table 7 shows the same characteristics as in the first embodiment, but the observation is made after 500 hours kept in the atmosphere of 60°C. A, B, C, D in Table 7 are the same positive electrode cases respectively as in the first embodiment.

**[Table 7]**

| Cell | Decrease ratio of capacity (%) | Increase ratio of AC impedance (%) | Burr occurring ratio (%) |
|---|---|---|---|
| A | - 3.0 | + 12 | 0 |
| B | - 4.8 | + 14 | 0 |
| C | - 6.1 | + 21 | 10.2 |
| D | - 7.5 | + 25 | 0 |

According to the present invention, it is possible to have lower cost, but higher corrosion resistibility materials, to improve the productivity of a cell and moreover to obtain high pressure tightness in an electrochemical cell.

The aforegoing description has been given by way of example only and it will be appreciated by a person skilled in the art that modifications can be made without departing from the scope of the present invention as defined in the claims.

## Claims

1. A non-aqueous electrolyte electrochemical cell including:
a positive electrode case (11) comprising a stainless steel having a pitting index between 30.5 and 45, the pitting being calculated by a formula Cr% + 3 x Mo% + 16 x N%, and characterised in that the stainless steel is an austenitic ferrite two phase stainless steel comprising 4.5 to 13% Ni, 20 to 26% Cr, 2 to 4% Mo and 0.05 to 0.3% N.

## Patentansprüche

1. Elektrochemische Zelle mit nichtwäßrigem Elektrolyt, umfassend:
ein Positivelektrodengehäuse (11), umfassend rostfreien Stahl mit einem Lochfraßindex zwischen 30,5 und 45, wobei der Lochfraßindex gemäß einer Formel Cr% + 3 x Mo% + 16 x N % berechnet wird, dadurch gekennzeichnet, daß der rostfreie Stahl ein austenitischer Ferrit-Zweiphasen-rostfreier Stahl ist, umfassend 4,5 bis 13 % Ni, 20 bis 26 % Cr, 2 bis 4 % Mo und 0,05 bis 0,3 % N.

## Revendications

1. Cellule électrochimique à électrolyte non-aqueux, comprenant un boîtier d'électrode positive (11) qui est constitué d'un acier inoxydable ayant un indice de corrosion par piqûres compris entre 30,5 et 45, l'indice de corrosion étant calculé par la formule Cr % + 3 x Mo % + 16 x N %, et caractérisé en ce que l'acier inoxydable est un acier inoxydable austénitique à deux phases ferritiques comprenant de 4,5 à 13 % de Ni, de 20 à 26 % de Cr, de 2 à 4 % de Mo et de 0,05 à 0,3 % de N.
